# EUROPEAN PATENT SPECIFICATION

(11) **EP 0 963 920 B1**
(45) Date of publication and mention of the grant of the patent: **08.09.2004**
(21) Application number: 99830328.3
(22) Date of filing: 27.05.1999
(51) Int. Cl.: B65D 88/32, B65G 65/44

(54) **A silo for storing chlorides, including opposed sliding bar extraction devices**
Silo zum Lagern von Chloriden, mit Austragvorrichtungen die gegenüberliegende verschiebbare Arme besitzen
Silo pour le stockage de chlorure, avec des dispositifs d'extraction comportant des bras coulissants opposés

(30) Priority: 12.06.1998 IT RM980383
(43) Date of publication of application: 15.12.1999
(73) Proprietor: AUTOSTRADE S.p.A., I-00159 Roma (IT)
(72) Inventor: Goretti, Pasquale, 00159 Roma (IT)
(74) Representative: Fiammenghi-Domenighetti, Delfina

(56) References cited:
- DE-B- 1 104 435
- FR-A- 923 164
- US-A- 1 783 003
- US-A- 2 880 892
- US-A- 4 157 761
- US-A- 5 697 535

## Description

The present invention relates to a silo for storing solid and dissolved chlorides, which are used for roading during the winter, wherein solid chlorides are employed in order to melt the ice formed on the road, and dissolved chlorides are used to prevent ice formation, that is as a precautionary measure, and are sprinkled on the road surface.

One of the outstanding features of modern economy is that services and manufacture of goods is done in a very organized and distributed way on the territory.

Thus, the "mobility" of goods and services can be considered as an integral part of the production, and this means that transportation in general, and particularly transportation on roads, can be considered as part of the production.

It has been estimated, referring to the introduction to the European Project DRIVE II, which concerns road traffic, that an increase of 1% of the GNP will result in an increase of 1.5% of the transport of goods and of 3.5% of the transport of persons and services.

The above discussion puts in evidence the importance of the availability of a fully efficient road network, even in presence of disadvantageous meteorological conditions, like ice and snow.

This results in a number of requisites being imposed on the methods employed, the rapidity of intervention, the efficiency, and consequently on the means used for roading (that is road maintenance) in the winter.

The traditional chloride storing systems are used exactly for the purpose of ensuring - due to their distribution on the territory - an immediate transportation of these materials towards the location of utilization.

This is done by means of appropriate vehicles called spreaders or spreading machines.

Storing by traditional methods may be performed by accumulation of the material on a certain area, by using storage floors, vertical silos, or by other means.

However, particularly vertical silos have many drawbacks, due to their influencing the environment because of their external appearance.

In fact, their height is approximately 18 meters. Up to now, nobody has succeeded in providing an efficient system which is at the same time environment friendly.

US 1,783,003 corresponding to the preamble of claim 1, discloses a storage trestle designed for shifting coal or any other loose material, from railway cars to trucks or wagons.

The trestle is subdivided into various modules, called pockets in that document, which are arranged on the upper floor, and between the supports of the upper floor a delivery truck can pass to collect the loose material discharged into them.

Upwardly projecting deflectors are provided in order to compel the loose material to flow (by gravity) towards the outlet openings (discharge openings). No mechanical moving means are provided in order to extract the loose material, by pushing it towards the outlet openings.

US 4,157, 761 discloses a discharger mechanism which is installable inside any storage container of loose material.

A stocker rod, associated to an operating cylinder, reciprocates (see Fig. 7 of that document) in order to discharge the loose material from a central opening.

Discharger mechanisms of this kind are already well known (see also page 9 lines 7-11 of this application), but they have never been applied to a storage silo comprising several parallel modules.

A main object of the present invention is to provide a particular mechanism for the actuation of the chloride discharging trapdoors, which causes first a horizontal translation of the trapdoors, and then a vertical ascending movement of the trapdoors, which finally closes the discharge outlets of the silo; in this manner the definite advantage is achieved that the movement is not simply "shutter like" and there is no risk that chloride residues get trapped on the seals, thereby forming crusts or deposits.

A further object of the present invention is to realize a silo of reduced height, preferably of about 10-12 meters, which is compatible with the requisites of town plans and landscape regulations.

Another object of the present invention is to realize a silo having a modular structure, a loading tunnel for the passage of vehicles used for roading during the winter, and a variable length according to the number of extraction tracks, wherein each extraction track is associated to a module.

By varying the number of modules it will be possible to construct plants with different loading capacities, e.g. 500 t, 650 t, 820 t, 1000 t, etc.

A fourth object of the invention is to provide a system for determining the weight of the chlorides acting on each single "quadrant" of the chloride storage chamber located at the upper floor of the silo. In this manner it will be possible to load the chlorides always in the quadrant where their weight is smallest, thereby distributing the chlorides in a uniform manner inside the chloride storage chamber.

A fifth object of the present invention is to provide a system comprising several mechanical extraction devices composed of opposed sliding bars, moving along the various tracks associated to a respective module of the silo.

These extraction devices move the granulated chlorides towards the central trapdoors of the silo. These extraction devices are necessary because, in contrast with a cylindrical silo whose very shape suffices to discharge the chlorides under the action of the gravity force alone, the silo of the present invention has a completely different structure, which is horizontally more extended but which is much lower (10-12 m instead of 18 m).

A further object of the invention is to provide chutes moving in unison with the lateral discharge trapdoors. In this way the lateral trapdoors are capable of conveying the granulated material towards the center of the loading tunnel traversed by the spreaders. The lateral trapdoors will be manually actuated in emergency situations.

A last object of the invention is to create "discrimination pitches" in order to discriminate between the extraction of the granulate under the action of gravity, and an extraction obtained forcibly.

The first kind of extraction occurs when the lateral trapdoors are manually operated - in emergency situations (interruption of power supply) -, and the second kind is performed by actuating the extraction devices, which are moved by hydraulic actuators.

The above objects are obtained by providing a silo having a parallelepipedal shape and a flat roof or a roof like that of ordinary houses, wherein the silo comprises several modules.

A track for a reciprocating frame composed of several sliding bars, is incorporated in each module. The wedge-shaped cross-section of the bars is oriented according to opposite directions, on one side and on the opposte side of the frame. In this way the (actuation) forces needed during the operation are reduced by a factor of 0.5, and moreover the extraction is continuous.

In order to obtain the above described (composite) movement of the trapdoors, an abutment pin is provided, which causes the upward movement of the discharge trapdoors to occur at the end of the shutter-like horizontal movement of the latter.

The present invention will now be described for illustrative and non-limitative purposes, with reference to a particular embodiment thereof, shown in the annexed drawings, wherein:
Fig. 1 is a front sectional view of the silo according to the invention;
Fig. 2 is a lateral sectional view in the direction of the arrow A of Fig. 1;
Fig. 3 is a sectional view of the discharge assembly composed of the central trapdoor and the two lateral trapdoors, during opening of a lateral trapdoor, when the extraction system is not in operation;
Fig. 4 is a view analogous to Fig. 3, illustrating the discharge of solid chlorides only from the central trapdoor, while the extraction system is working;
Fig. 5 shows the discrimination pitches;
Fig. 6 is a plan view of the extraction system frame;
Figs. 7a-7c illustrate the mechanisms and operation of the central trapdoor;
Figs. 8a-8c illustrate the mechanisms and operation of the lateral trapdoors;
Fig. 9 is a plan view of various sliding bar frames (extraction devices), each of them sliding along the respective track of a silo's module.

The silo is characterized in that it has a very compact size and the use of its available inner space can be optimized.

The silo's height does not exceed 10 and at most 12 meters, its width is usually limited to 11 meters, and its length may vary between 11 and 16 meters, while its capacity can reach 1000 t of sodium chloride.

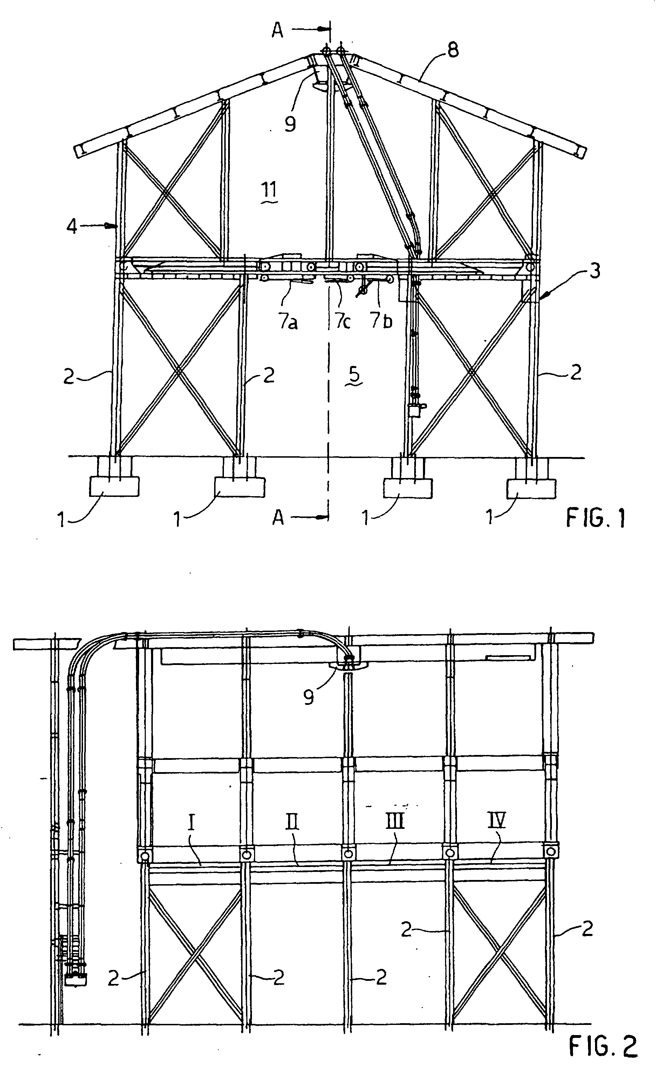

As shown in Fig. 1, the silo is realized on a standard foundation of reduced excavation depth, using prefabricated plinths 1 of reinforced concrete, and columns 2 made of H-beams are mounted thereon.

The silo comprises a lower floor 3 and an upper floor 4.

The lower floor 3 is crossed by the spreading machines, which pass through the central tunnel 5 and the chlorides contained on the upper floor 4 are thereby discharged into the spreaders.

As shown in the side view of Fig. 2, the present embodiment of the silo comprises four tracks I, II, III, IV, located at the upper floor 4, which are associated to respective extraction devices which form devices capable of conveying the solid chloride towards the center of the silo where tha tunnel 5 is located.

Said tracks I, II, III, IV are associated to respective modules I, II, III, IV. Each module has the same structure as the other modules, and the use of a greater number of modules allows to increase the silo's length and to increase in this way its capacity, as mentioned previously.

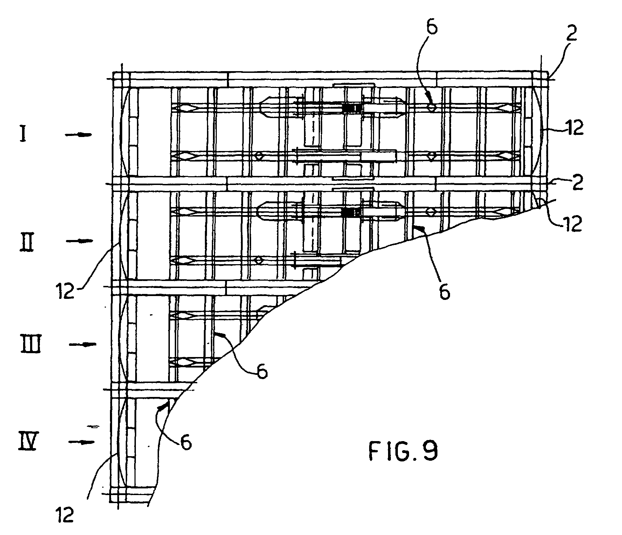

The extraction devices shown in the plan view of fig. 9 allow to displace the sodium chloride towards the three trapdoors 7a, 7b and 7c of Fig. 1. It can be noted - in Fig. 1 - that the three trapdoors comprising two lateral trapdoors 7a, 7b and a central trapdoor 7c are located above the central tunnel 5 which is traversed by the spreading machines.

In the present embodiment comprising 4 modules, there are 8 lateral trapdoors and 4 central trapdoors. They are all arranged along the central tunnel 5.

Usually, in cylindrical silos no extraction devices are needed because the salt falls under gravity along the wall of the "cylinder" and exits from a central hole, wherefrom it is taken by the spreading machines. Since the present invention is concerned with a silo having a parallelepipedal shape and a lower height, and since the upper floor 4 is not slanting, the above extraction devices are necessary.

The landscape appearance is influenced in a limited way since the silo reaches at most a height of 12 meters and externally it looks like a maintenance shed that can be closed by means of sliding doors preventing the salt from coming out.

At the upper end of the silo, and in the present case on the inner side of the roof 8, there is mounted a spreading disc or disc-shaped distributor 9.

The operation of this disc 9 is described in another patent application of the same Applicant.

It serves to uniformly distribute the chloride inside the silo, on the upper floor 4.

The disc 9 can direct about 90% of the solid chloride towards a selected one of the four "quadrants" which ideally subdivide into four equal parts the storage chamber located at the upper floor 4.

In the following, a description will be given of the solid chloride extraction system, which generally includes:
- the three trapdoors 7a, 7b, 7c and their respective mechanisms;
- the extraction device (one for each module and each track I, II, III, IV); and
- the discrimination pitches which discriminate between an extraction of the material under gravity and a "forced" extraction.

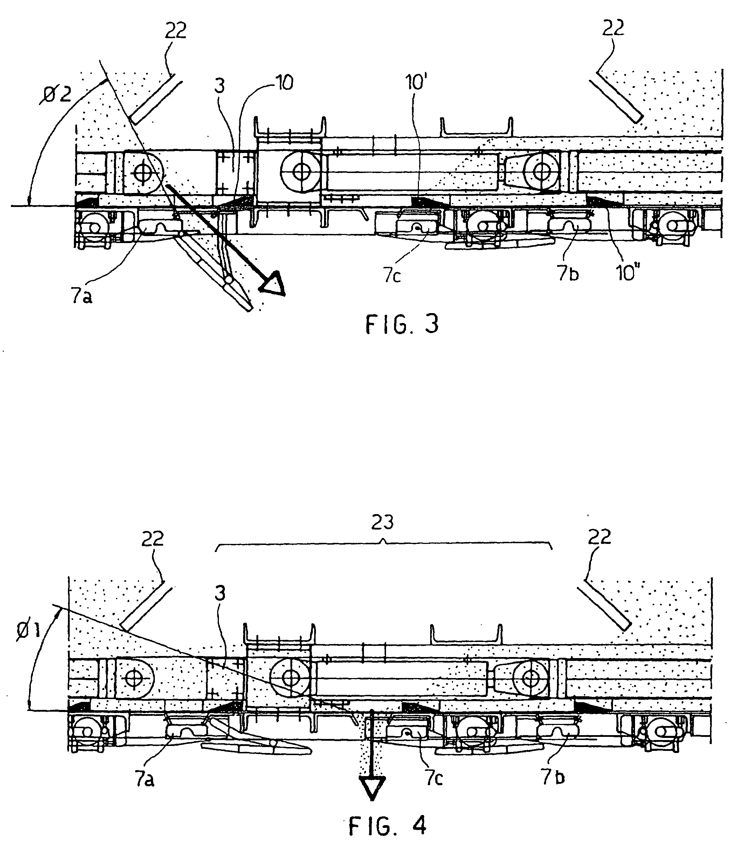

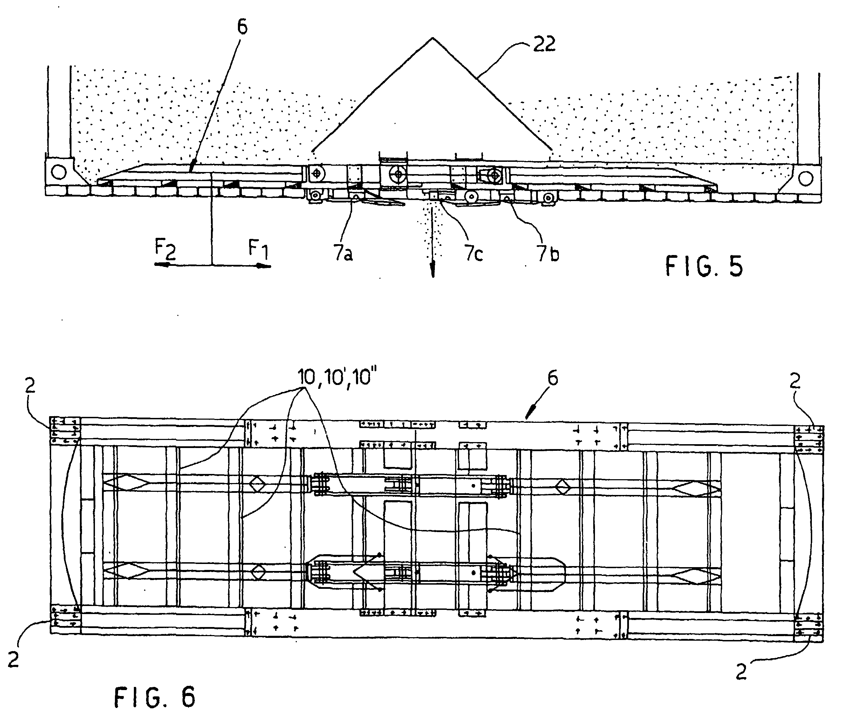

The operation of the extraction device 6, which is generally shown in the plan view of Fig. 6, can be understood referring to Figs. 3 and 4.

The operation principle of a mechanical extraction system comprising "sliding bars" is already known: it is mainly employed for the extraction of wood chips, sludges from cleaners, solid waste, but also for potassium salt, combustible solid coals, etc.

The sliding bar frame or extraction device 6 includes a plurality of bars 10, 10', 10'', ... and reciprocates on the bottom of the storage chamber 11 located at the upper floor 4.

The movement is performed by means of hydraulic actuators controlled by a hydraulic control unit located on the ground floor 3.

The sliding (extraction) bars, which are wedge-shaped and sharpened on one side, penetrate below the material to be extracted, while at the same time, on the opposite side (of the chamber), they drag the material to be discharged, towards the central trapdoor 7c.

It can be appreciated that the penetration of the bars 10, 10', 10'',... below the material, requires a much greater force (more than twice) than the effort required for displacing and extracting the material.

The present embodiment includes a sliding bar frame 6 which comprises two opposed parts, so that, while one of said parts performs the extraction and transport of the material towards the center of the extraction track where the central trapdoor 7c is provided, the other part which is located on the opposite side, penetrates under the material. In this manner a continuos operation is obtained during the whole movement of the sliding frame 6, but in the first place the required actuation forces are reduced by a factor of 0.5.

Fig. 9 shows the plurality of sliding frames or extraction devices 6, located on the bottom of the storage chamber 11 and associated to a respective module I, II, III, IV (four modules in the present embodiment). Also the extraction tracks of each module on which slide the extraction devices 6, are indicated by the same symbols I, II, III, IV.

Figs. 6 and 9 also show cylindrical calendered and vitrified sheet metal plates 12, used for "plugging up" the supporting structure and which are mounted in a tensile manner on the columns (standards) 2 of the structure.

Another patent application of the same Applicant describes the object attained and the advantages obtained through the use of the sheet metal plates 12.

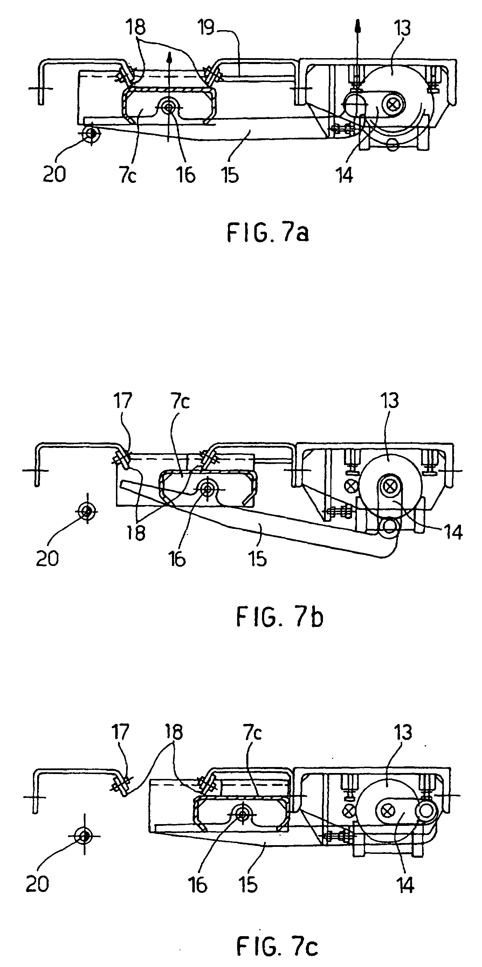

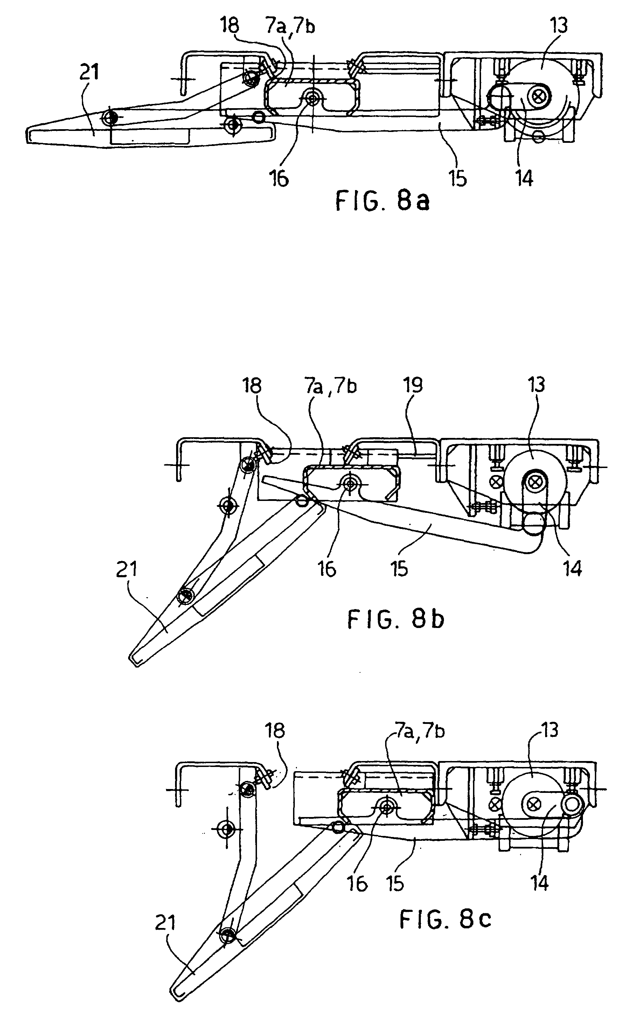

Referring to Figs. 7a, 7b, 7c and 8a, 8b, 8c the mechanisms of a lateral trapdoor 7a or 7b, and of a central trapdoor 7c, comprise a reduction gear 13, whose shaft is rigidly connected to a lever 14.

The opposite end of the latter, is articulated to a connecting rod 15, whose hinge 16 is articulated to the trapdoor 7c (Figs. 7a - 7c) or to the lateral trapdoor 7a or 7b (Figs. 8a - 8c).

The discharge outlet 17 of a trapdoor, is provided with seals 18. The hinge 16 pushes the trapdoor against the seals or gaskets 18.

The guiding means 19 allow a horizontal displacement of the trapdoor in a shutter-like fashion.

An abutment pin 20 lifts the trapdoor when the latter reaches its end-of-stroke position, thereby pushing the latter against the seals 18.

This prevents the solid chloride residues from being trapped between the trapdoor and the seal, jeopardizing the correct operation of the mechanism, due to formation of deposits and crusts.

It must be noted that the mechanisms and operation are identical for both cases, that is for the lateral trapdoors 7a and 7b, and for the central trapdoor 7c. However, the reduction gear 13 of Figs. 8a, 8b and 8c, is actuated by hand by means of a chain, and has a very advantageous transmission ratio. The trapdoors 7a or 7b are actuated only in exceptional cases, when electric power is (temporarily) not available. On the other hand, the trapdoors 7c are actuated by the hydraulic motor reducer 13.

In particular, Figs. 7a and 8a show the trapdoors in the closed condition, Figs. 7b and 8b show the same during opening, and Figs. 7c and 8c show their open position.

Only one (7c) of the three trapdoors 7a, 7b, 7c is located at the center of the extraction track I, II, III, IV, while the other two (7a, 7b) are laterally and symmetrically positioned with respect to it.

The lateral discharge outlets 18 are provided with a chute 21 moving in synchronism with the opening or closing movement of the trapdoor 7a or 7b.

The movement of the chute 21 is caused by connecting rods and hinges and is derived from the primary movement of the trapdoor. The object attained by this chute is to convey the granulate from the lateral outlet towards the center of the loading tunnel 5 traversed by the trucks.

The function of the discrimination pitches 22 will now be explained with reference to Figs. 3, 4, 5.

At the center of each extraction track I, II, III, IV, above the three discharge trapdoors, a pitch-like covering 22 is provided, allowing to enter inside the silo even when the latter is full.

The pitch-like covering has two lateral apertures which lead to each half of an extraction track (half-track), and the granulate can pass through these apertures and move to the center 23 of the track.

The height and position of the lateral apertures of the pitches 22 are chosen in such a way as to allow the natural flow under gravity of the granulate, through the lateral trapdoors 7a and 7b. In fact, these trapdoors can be operated manually and allow the withdrawal or discharge of the granulate even when the electric power necessary for the mechanical extraction is not available.

Moreover the flow of granulate through the central trapdoor 7c cannot take place under the action of gravity, due to the position of the central trapdoor, which is beyond the "cone" of the granulate (φ 2) formed by the internal friction angle of the material.

Therefore, the extraction can be carried out through this trapdoor only if it is mechanically forced by means of the extraction system (see the angle (φ 1) between the aperture of the pitch 22 and the outlet of the central trapdoor 7c).

The present invention concerns also a procedure for determining the weight acting on a single "quadrant" of the storage chamber 11.

Each support column 2 of the silo is monitored by means of a strainmeter, whose electric signal, proportional to the compression of the column, is sent through appropriate interfaces, to a central computer. A specific software program resident in the computer, is capable of capturing and processing this information.

The whole procedure, starting from the detection of the electric signal from each column 2, up to the automatic processing of the information, allows to determine the load acting on each separate quadrant and on each separate extraction track I, II, III, IV.

Said determination allows in turn the automatic selection
a) during the loading step of the silo, of the loading tube and of the rotation direction of the distributing disc 9, in order to load the quadrant associated to the least weight (as described in another already mentioned patent application of the same applicant), and
b) during the discharge from the silo, of the extraction track I, II, III, IV with the greatest load.

The silo also comprises a storage tank for a solution of calcium chloride, which is incorporated in the plant supporting structure at the ground floor, and whose capacity is equal, for instance, to 40000 liters, wherein this storage tank is provided with an assembly for displacing the solution, which is capable of performing the following functions:
filling the tank, filling the spreader, programmed recirculation and recirculation on request.

A detection system is also provided for continuosly monitoring the stock, based on an electronic pressure transducer which is submersed in the solution (chloride solution).

Moreover, a user interface provided with a touch-sensitive screen, interlocked to an industrial PC with a specific resident software, supervises all functions of the plant.

## Claims

1. A silo for storing solid and dissolved chlorides, comprising a plurality of modules which allow to adapt the capacity of the silo to the particular needs, a ground floor (3) which is crossed by a longitudinal tunnel (5) traversed by the spreaders, an upper floor (4) for storing the solid chloride, said modules being parallel to each other and extending transversely with respect to the longitudinal tunnel (5), **characterized in that** each of the modules comprises a track (I, II, III, IV) for a reciprocating extraction frame (6) composed of sliding bars (10, 10', 10",...) with oppositely directed profile; said frame being located on the bottom of the storage chamber (11) and penetrating below the material to be extracted, on one side thereof, and pushing the material - on the other side thereof- towards the discharge trapdoors (7a, 7b, 7c), which are located on the bottom of the storage chamber (11) and above the extraction channel (5); the silo being further **characterized in that** said trapdoors (7a, 7b, 7c) comprise a mechanism (13, 14, 15, 16, 19, 20) which moves the trapdoors in a substantially horizontal direction at the beginning of the closure movement, and at the end of this movement, in a substantially vertical upward direction, thereby compressing the seals of a discharge outlet (17); said trapdoors being first moved vertically downward during their opening, and then in a substantially horizontal direction.

2. A silo according to claim 1, **characterized in that** said mechanism (13, 14, 15, 16, 19, 20) comprises an abutment pin (20) and **in that** a connecting rod (15) of said mechanism abuts said pin at the end-of-stroke position, and said connecting rod has an inclined end portion which lifts the trapdoor (7a, 7b, 7c) articulated to the connecting rod (15).

3. A silo according to claim 1 or 2, **characterized in that** said trapdoors (7a, 7b; 7c) are actuated by means of hydraulic motors or actuators controlled by a central control unit.

4. A silo according to claim 1, 2, 3, **characterized in that** said trapdoors (7a, 7b; 7c) comprise two lateral trapdoors (7a, 7b) and a central trapdoor (7c) for each track (I,II,III,IV,...), wherein each lateral trapdoor (7a, 7b) is connected to a chute (21) which moves in unison with the mechanism (13, 14, 15, 16, 19, 20) of the trapdoor (7a, 7b) and each lateral trapdoor is manually operated by means of a reduction gear.

5. A silo according to all claims 1-4, further **characterized in that** discrimination pitches (22) are mounted inside the storage chamber (11), which allow only a forced extraction of the solid chloride, from the central trapdoors (7c), and the extraction by gravity, from the lateral trapdoors (7a, 7b); and **in that** pressure sensors are mounted on the various elements (2) making up the supporting structure of the silo, and said sensors send their signals to a central computer which processes them according to a predetermined algorithm, in order to determine the weight acting on each "quadrant" of the storage chamber (11), so that during the discharge of the chlorides it will be possible to determine which "quadrant" supports the greatest load, and during the loading of the silo, it will be possible to determine the "quadrant" with the smallest load; each frame (6) of the silo associated to a respective track (I, II, III, IV), being actuated by a hydraulic actuator or a hydraulic motor controlled by a central hydraulic unit located at the ground floor (3), and said sliding bars (10, 10', 10", ...) having a wedge-like profile.

## Patentansprüche

1. Silo zum Lagern von festen und gelösten Chloriden, welches Folgendes aufweist: eine Vielzahl von Modulen, die eine Anpassung der Kapazität des Silos an besonderen Bedarf ermöglicht, ein Erdgeschoss (3), welches gequert wird durch einen langgestreckten Tunnel (5), der durchquert wird durch die Spreizkörper, ein Obergeschoss (4) zur Lagerung des festen Chlorides, wobei die Module gegenseitig parallel ausgerichtet sind und sich relativ zum langgestreckten Tunnel (5) quer erstrecken, **dadurch gekennzeichnet, dass** jedes der Module eine Bahn (I, II, III, IV) umfaßt für einen hin und her bewegbaren Austragsrahmen (6), der aus verschiebbaren Schienen (10, 10',10ⁿ,...) zusammengesetzt ist mit entgegengesetzt ausgerichteten Profilen; wobei der Rahmen auf dem Boden der Lagerkammer (11) plaziert ist und unter das abzugebende Material auf der einen Seite desselben eindringt und zum Schieben des Materials - auf der anderen Seite desselben - in Richtung auf die Abgabeklappen (7a,7b,7c), welche sich auf dem Boden der Lagerkammer (11) und über dem Austragskanal. (5) befinden; wobei das Silo weiterhin **dadurch gekennzeichnet ist, dass** die Klappen (7a,7b,7c) einen Mechanismus (13,14,15,16,19,20) aufweisen, welcher die Klappen zu Beginn der Schließbewegung in einer im Wesentlichen horizontalen Richtung bewegen und zum Ende dieser Bewegung in einer im Wesentlichen vertikalen Richtung nach oben, womit die Dichtungen der Entladeöffnungen (17) komprimiert werden; wobei die Klappen beim Öffnen zuerst vertikal abwärts bewegt werden und dann in einer im Wesentlichen horizontalen Richtung.

2. Silo nach Anspruch 1, **dadurch gekennzeichnet, dass** der Mechanismus (13,14,15,16,19,20) einen Auflagestift (20) umfaßt und dass eine Verbindungsstange (15) des Mechanismus auf dem Stift in der Endposition eines Taktes aufliegt und die Verbindungsstange ein angewinkeltes Endteil aufweist, welches die Klappe (7a,7b,7c) deutlich zu der Verbindungsstange (15) anhebt.

3. Silo nach Anspruch 1 oder 2, **dadurch gekennzeichnet, dass** die Klappen (7a,7b,7c) bewegt werden mittels eines hydraulischen Motors oder eines durch eine zentrale Prozessoreinheit gesteuerten Aktuators.

4. Silo nach Anspruch 1, 2, 3, **dadurch gekennzeichnet, dass** die Klappen (7a,7b,7c) zwei laterale Klappen (7a,7b) umfassen und eine zentrale Klappe (7c) für jede Bahn (I, II, III, IV, ...), worin jede laterale Klappe (7a, 7b) mit einer Schütte (21) verbunden ist, welche sich in Einklang mit dem Mechanismus (13,14,15,16,19,20) der Klappe (7a,7b) bewegt und jede laterale Klappe wird manuell mittels eines Untersetzungsgetriebes betrieben.

5. Silo nach einem der Ansprüche 1 bis 4, **dadurch gekennzeichnet, dass** Abstandshalter (22) innerhalb der Lagerkammer (11) befestigt sind, welche lediglich einen aktiven Austrag des festen Chlorides von den zentralen Klappen (7c) zulässt und den Austrag durch Schwerkraft von den lateralen Klappen (7a,7b); und dadurch, dass Drucksensoren an den verschiedenen Elementen (2) befestigt sind, die die Unterstützungsstruktur des Silos darstellen und diese Sensoren senden ihre Signale an einen zentralen Rechner, welcher sie entsprechend einem vorbestimmten Algorithmus bearbeitet um das Gewicht, welches auf jedem "Quadranten" der Lagerkammer (11) wirkt, zu bestimmen, so dass während des Austrages von Chlorid die Bestimmung des "Quadranten" möglich ist, der die größte Last unterstützt, und während des Beladens des Silos wird ermöglicht den "Quadranten" mit den kleinsten Last zu bestimmen, wobei jeder Rahmen (6) des Silos, verbunden mit einer entsprechenden Bahn (I,II,III,IV) bewegt wird durch einen hydraulischen Aktuator oder einen hydraulischen Motor, angesteuert durch eine zentrale hydraulische Einheit, die im Erdgeschoss (3) plaziert ist und die verschiebbaren Schienen (10,10',10'',...) weisen ein keilförmiges Profil auf.

## Revendications

1. Silo de stockage de chlorures solides et dissous, comprenant plusieurs modules permettant d'adapter la capacité du silo aux besoins particuliers, un rez-de-chaussée (3) croisé par un tunnel longitudinal (5) traversé par les épandeurs, un étage supérieur (4) pour stocker le chlorure solide, lesdits modules étant parallèles les uns aux autres et s'étendant transversalement par rapport au tunnel longitudinal (5), **caractérisé en ce que** chacun des modules comprend une piste (I, II, III, IV) pour un châssis d'extraction (6) déplaçable suivant un mouvement de va-et-vient et composé de barres coulissantes (10, 10', 10", ...) ayant des profils dirigés en sens inverse; châssis qui est situé sur le fond de la chambre de stockage (11) et qui, d'un côté, pénètre sous la matière à extraire et, de l'autre, pousse la matière vers les trappes de déchargement (7a, 7b, 7c) qui sont situées dans le fond de la chambre de stockage (11) et au-dessus du canal d'extraction (5); le silo étant en outre **caractérisé en ce que** lesdites trappes (7a, 7b, 7c) comprennent un mécanisme (13, 14, 15, 16, 19, 20) qui les déplace dans une direction sensiblement horizontale au début du mouvement de fermeture, et à la fin de ce mouvement, dans une direction sensiblement verticale vers le haut, pour ainsi comprimer les joints d'étanchéité d'une sortie de déchargement (17), lesdites trappes étant d'abord déplacées verticalement vers le bas pendant leur ouverture, puis dans une direction sensiblement horizontale.

2. Silo selon la revendication 1, **caractérisé en ce que** ledit mécanisme (13, 14, 15, 16, 19, 20) comprend un axe de butée (20) et **en ce qu'**une tige de liaison (15) dudit mécanisme vient en butée contre ledit axe dans la position de fin de course, ladite tige de liaison ayant une partie d'extrémité inclinée qui soulève la trappe (7a, 7b, 7c) articulée sur elle.

3. Silo selon la revendication 1 ou 2, **caractérisé en ce que** lesdites trappes (7a, 7b, 7c) sont actionnées au moyen de moteurs ou d'actionneurs hydrauliques commandés par une unité de commande centrale.

4. Silo selon les revendications 1, 2, 3, **caractérisé en ce que** lesdites trappes (7a, 7b, 7c) comprennent deux trappes latérales (7a, 7b) et une trappe centrale (7c) pour chaque piste (I, II, III, IV, ...), chaque trappe latérale (7a, 7b) étant reliée à une glissière (21) qui se déplace en même temps que le mécanisme (13, 14, 15, 16, 19, 20) de la trappe (7a, 7b) et chaque trappe latérale étant actionnée manuellement au moyen d'un engrenage de réduction.

5. Silo selon toutes les revendications 1 à 4, **caractérisé en outre en ce que** des pentes de discrimination (22) sont montées à l'intérieur de la chambre de stockage (11), ne permettant qu'une extraction forcée du chlorure solide depuis les trappes centrales (7c), et l'extraction par gravité depuis les trappes latérales (7a, 7b); et **en ce que** des capteurs de pression sont montés sur les divers éléments (2) formant la structure de support du silo, et lesdits capteurs envoient leurs signaux à un ordinateur central qui les traite selon un algorithme prédéfini, pour déterminer le poids agissant sur chaque "secteur" de la chambre de stockage (11), de sorte qu'il soit possible de déterminer, pendant le déchargement des chlorures, le "secteur" qui supporte la charge la plus grande, et pendant le remplissage du silo, le "secteur" ayant la charge la plus petite; chaque châssis (6) du silo associé à une piste respective (I, II, III, IV) étant actionné par un actionneur hydraulique ou un moteur hydraulique commandé par une unité hydraulique centrale située au rez-de-chaussée (3), et lesdites barres coulissantes (10, 10', 10", ...) ayant un profil cunéiforme.
